# EUROPÄISCHE PATENTSCHRIFT

(11) **EP 1 144 977 B1**
(45) Veröffentlichungstag und Bekanntmachung des Hinweises auf die Patenterteilung: **15.10.2003**
(21) Anmeldenummer: 99948889.3
(22) Anmeldetag: 29.09.1999
(51) Int. Cl.: G01L 13/02, G01L 9/12, G01L 9/06, G01P 15/08

(54) **VERFAHREN ZUM ERZEUGEN EINES MIKRO-ELEKTROMECHANISCHEN ELEMENTS**
METHOD OF PRODUCING A MICRO-ELECTROMECHANICAL ELEMENT
PROCEDE POUR PRODUIRE UN ELEMENT MICRO-ELECTROMECANIQUE

(30) Priorität: 15.12.1998 DE 19857741; 18.06.1999 DE 19927970
(43) Veröffentlichungstag der Anmeldung: 17.10.2001
(73) Patentinhaber: FRAUNHOFER-GESELLSCHAFT ZUR FÖRDERUNG DER ANGEWANDTEN FORSCHUNG E.V., 80636 München (DE)
(72) Erfinder: NEUMEIER, Karl, D-82008 Unterhaching (DE); BOLLMANN, Dieter, D-81475 München (DE)
(74) Vertreter: Schoppe, Fritz, Dipl.-Ing.
(86) Internationale Anmeldenummer: EP9907204
(87) Internationale Veröffentlichungsnummer: WO00036387

(56) Entgegenhaltungen:
- EP-A- 0 639 761
- EP-A- 0 702 221
- US-A- 4 513 348
- US-A- 4 586 109
- L.J. SPANGLER ET AL.: "A BULK SILICON SOI PROCESS FOR ACTIVE INTEGRATED SENSORS" SENSORS AND ACTUATORS A., Bd. A24, Nr. 2, Juli 1990 (1990-07), Seiten 117-122, XP000148921 ELSEVIER SEQUOIA S.A., LAUSANNE., CH ISSN: 0924-4247

## Beschreibung

Die vorliegende Erfindung bezieht sich auf ein Verfahren zum Erzeugen eines mikro-elektromechanischen Elements, und spezieller eines solchen mikro-elektromechanischen Elements, bei dem eine mikromechanische Struktur und elektronische Komponenten in dem gleichen Halbleiterwafer angeordnet sind.

Aufgrund der schnellen Entwicklung auf dem Gebiet der Halbleiterindustrie und der Mikroelektronik verdrängen mikromechanische Elemente, beispielsweise mikromechanische Druckmeßzellen auf Siliziumbasis, mehr und mehr klassische mechanische Druckwandler. Mikromechanische Elemente werden beispielsweise in der Automatisierungs- und Medizin-Technik, sowie in Kfz-Anwendungen in großen Mengen eingesetzt. Vorzugsweise werden dabei mikro-elektromechanische integrierte Systeme verwendet, die die Verbindung von mechanischen und elektronischen Funktionen auf einem Substrat realisieren. Neben den in CMOS- oder ähnlicher Technologie hergestellten elektronischen Bauelementen, bei denen es sich beispielsweise um Meßwandler, Verstärker, Speicher, Mikrocontroler, usw., handelt, befinden sich dabei in denselben Schichten mechanische Bauelemente. Diese können beispielsweise Membranen von Drucksensoren, elastische Platten von Ventilen oder Pumpen, schwingende Massen von Beschleunigungssensoren, bewegliche Finger oder einseitig eingespannte Arme von Schaltern und dergleichen sein. Über die von der Planartechnologie gewohnte mehr oder weniger glatte Oberfläche hinaus sind diese mechanischen Strukturen dreidimensional und umfassen freitragende Strukturen und vergrabene Hohlräume.

Es war bisher bekannt, solche Hohlräume durch naßchemisches Ätzen zu erzeugen, bzw. durch Verbinden zweier zuvor einzeln fertig bearbeiteter Scheiben. Als Verbindungstechnik zum Verbinden der einzeln bearbeiteten Scheiben kommen dabei ein Waferbonden (Silicon Fusing Bonding), ein anodisches Bonden oder ein Kleben in Frage. In jedem Fall sind bei herkömmlichen Verfahren vor dem Verbinden der einzelnen Scheiben dieselben vollständig bearbeitet, so daß danach keine Verarbeitungsschritte mehr stattfinden müssen, die zu einer Beeinträchtigung der mechanischen Strukturen führen können.

Beim naßchemischen Unterätzen von Strukturen tritt das Problem des sogenannten "Sticking" auf, bei dem die freitragende Struktur beim Trocknen der Flüssigkeit durch Kapillarkräfte an der benachbarten Oberflächen haften bleibt und somit ihre Beweglichkeit verliert. Kleine Gräben, Löcher und Spalten bereiten überdies Probleme beim Benetzen mit Flüssigkeiten (beispielsweise mit Ätzlösungen, Reinigungswasser, Photolack) und beim Entfernen der Flüssigkeiten, beispielsweise durch Blasen, die in Ecken haften bleiben können. Beim Abschleudern können Tropfen zurückbleiben, die beim Eintrocknen Ränder erzeugen. Auch die Reinigung durch Bürsten ist problematisch, da die beweglichen Strukturen dabei abgebrochen werden können. Andererseits ist jedoch eine reine Oberfläche der Strukturen notwendig, um die Herstellungsverfahren zum Erzeugen der Auswertestrukturen, wie z.B. ein CMOS-Verfahren, anwenden zu können. Durch die Gefahr der Verschleppung von Partikeln und Kontaminationen kann bei offenen Strukturen die CMOS-Fähigkeit nicht mehr gegeben sein, d.h. bestimmte Prozeßabläufe sind in einer CMOS-Linie nicht erlaubt. Darüberhinaus wird beim Vereinzeln der Chip aus dem Waferverbund mit einer Wafersäge mit Wasser gespült, das in offene Hohlräume eindringen kann, und somit das Problem bezüglich Partikeln und Kontaminationen noch erschweren kann.

Überdies ist es bekannt, membranartige Strukturen durch die Verwendung eines KOH-Rückseitenätzens zu erzeugen, nachdem die elektronischen Komponenten auf der Vorderseite eines Wafers fertiggestellt sind. Durch die bei einer KOH-Ätzung auftretenden schrägen Ätzkanten tritt hier jedoch ein hoher Verlust an Integrationsdichte auf, insbesondere, wenn eine hohe Stückzahl mikro-elektromechanischer Komponenten aus einem Wafer gebildet wird.

unterschiedliche Verfahren zum Herstellen von Halbleiterdruckfühlern sind ferner in der DE 3743080 A1 beschrieben.

In der DE-C-19543893 ist ein Verfahren zum Ausrichten von in einem Substrat zu erzeugenden Strukturen beschrieben, bei dem eine membranartige Struktur über einem Hohlraum gebildet wird. Zu diesem Zweck wird zunächst ein abgeschlossener Hohlraum zwischen zwei Substraten erzeugt, indem in einer Maskierungsschicht auf einem der Substrate eine Ausnehmung erzeugt wird, nachfolgend die beiden Substrate über die Maskierungsschicht verbunden werden und abschließend eines der Substrate gedünnt wird.

In der US-A-4586109 ist ein Verfahren zur Herstellung eines kapazitiven Drucksensors beschrieben. Zu diesem Zweck wird zunächst eine auf einem Substrat angeordnete Schicht strukturiert, so daß nach dem Verbinden des Substrats über die Schicht mit einem weiteren Substrat ein geschlossener Hohlraum gebildet ist. Dieser Hohlraum kann dann zur Erzeugung eines Relativdrucksensors über eines der Substrate geöffnet werden.

Aus der EP-A-639761 ist ein Verfahren zum Herstellen eines Differenzdrucksensors bekannt, bei dem eine Substratstruktur, in der ein mikromechanisches Element gebildet ist, mit einem Glassubstrat verbunden wird.

Die Aufgabe der vorliegenden Erfindung besteht darin, Verfahren zum Herstellen von mikro-elektromechanischen Elementen zu schaffen, die die Anwendung herkömmlicher Standardhalbleiterfertigungsprozesse zur Erzeugung elektronischer Komponenten in dem Wafer, in dem auch mikromechanische Elemente gebildet sind, ermöglichen, wobei die Verfahren die Erzeugung der mikro-elektromechanischen Elemente mit einer hohen Ausbeute ermöglichen und die erzeugten mikromechanischen Elemente flexibel einsetzbar sind.

Diese Aufgabe wird durch Verfahren gemäß Anspruch 1 gelöst.

Erfindungsgemäß bleibt der Hohlraum, der zusammen mit der membranartigen Struktur ein mikromechanisches Element definiert, stets hermetisch abgeschlossen, bis die elektronischen Komponenten, beispielsweise eine integrierte Schaltung, fertiggestellt sind, so daß die oben beschriebenen Probleme bei der Anwendung beispielsweise eines CMOS-Verfahrens zur Erzeugung einer integrierten Schaltung erfindungsgemäß nicht auftreten. Überdies entfallen aufgrund des hermetisch abgeschlossenen Hohlraums die vorher erwähnten Probleme des Beseitigens der Ätzflüssigkeiten aus den Hohlräumen, da aufgrund der hermetischen Abgeschlossenheit während der Herstellung der integrierten Schaltung keine Medien, wie z.B. Flüssigkeiten, Gase, Feststoffe und dergleichen, in den Hohlraum eindringen können. Folglich ermöglicht das erfindungsgemäße Verfahren die Herstellung von mikro-elektromechanischen Elementen, beispielsweise Drucksensoren oder gesteuerten Ventilen, mit einer verringerten Anzahl von Bearbeitungsschritten, so daß die vorliegende Erfindung eine kostengünstige Herstellung ermöglicht.

Diese Vorteile werden erfindungsgemäß erreicht, indem ein hermetisch abgeschlossener Hohlraum in einer zwischenschicht gebildet wird, die zum Verbinden zweier Halbleiterwafer verwendet wird. Bei bevorzugten Ausführungsbeispielen der Erfindung ist auf beiden Halbleiterwafern eine zwischenschicht aufgebracht, von denen eine oder beide strukturiert werden, um nach dem Verbinden den Hohlraum zu bilden, wobei es sich bei den Zwischenschichten um isolierende oder leitende Schichten handelt, die beispielsweise aus Oxid (thermisch oder TEOS), Polysilizium, Nitrid oder Metall bestehen können. Diese Zwischenschichten können mittels bekannter Verbindungsverfahren, beispielsweise einem Waferbonden (Silicon Fusion Bonding), einem anodischen Bonden oder einem Kleben, miteinander verbunden werden. Alternativ kann eine größere Anzahl von Zwischenschichten zwischen den zu verbindenden Wafern verwendet werden, um damit die Erzeugung eines Hohlraums mit Bereichen einer variablen Höhe zu ermöglichen.

Zum Öffnen des hermetisch abgeschlossenen Hohlraums kann dabei eine Vielzahl von Verfahren verwendet werden, wobei ein Zugang zu dem Hohlraum bei bevorzugten Ausführungsbeispielen der vorliegenden Erfindung durch Erzeugen einer definierten Öffnung in der membranartigen Struktur realisiert wird, da dies ohne größeren Aufwand das Erzeugen eines Zugangs zu dem Hohlraum ermöglicht. Die Öffnung kann durch eine Vielzahl von Verfahren in der membranartigen Struktur definiert werden, beispielsweise durch das Verwenden einer Nadel oder einer Klinge, durch die Verwendung einer gepulsten Laserstrahlung oder durch Ätzverfahren. Wird mittels des erfindungsgemäßen Verfahrens eine Mehrzahl von mikro-elektromechanischen Elementen in einem Wafer erzeugt, die nachfolgend vereinzelt werden, kann durch das Vereinzeln der Zugang zu dem vorher hermetisch abgeschlossenen Hohlraum geschaffen werden, indem beim Strukturieren der einen oder mehreren Zwischenschichten ein Kanal strukturiert wird, der bis zu der Grenzfläche reicht, an der dann vereinzelt wird.

Das erfindungsgemäße Verfahren ist insbesondere geeignet, um Drucksensoren oder Beschleunigungssensoren herzustellen, eignet sich jedoch auch zur Erzeugung von Fluidsystemen, die zusammen mit Sensoren, Aktoren und/oder Auswertelogiken als ein Mikrosystem realisiert sind.

Um einen Differenzdrucksensor zu erzeugen, werden erfindungsgemäß mindestens zwei nach außen hermetisch abgeschlossene Hohlräume in der oder den zwischen den Wafern angeordneten Zwischenschichten gebildet, die über einen Kanal verbunden sind, wobei dann die über einem der Hohlräume angeordnete membranartige Struktur mit einer Öffnung versehen wird, so daß über diese Öffnung ein Druck an die Unterseite der nicht geöffneten membranartigen Struktur angelegt werden kann, so daß der Differenzdruck zwischen Oberseite und Unterseite dieser Membran erfaßt werden kann.

Das Verhältnis von Hohlraumvolumen zum Strömungswiderstand des Verbindungskanals kann in weiten Grenzen so gestaltet werden, daß die Ansprechzeit, d.h. die Zeitkonstante, des Sensors in einem gewünschten Bereich liegt. Somit ist beispielsweise ein Variometer für Anwendungen in der Luftfahrt realisierbar.

Ferner eignet sich das erfindungsgemäße Verfahren zur Herstellung von Beschleunigungssensoren, wobei in der membranartigen Struktur eine Mehrzahl von Öffnungen derart realisiert wird, daß die membranartige Struktur eine Trägerstruktur für die bewegliche Masse bildet.

Weiterbildungen der vorliegenden Erfindung sind in den abhängigen Ansprüchen dargelegt.

Bevorzugte Ausführungsbeispiele der vorliegenden Erfindung werden nachfolgend bezugnehmend auf die beiliegenden Zeichnungen näher erläutert. Es zeigen:
- Fig. 1a) bis 1c): schematische Querschnittansichten zur Erläuterung eines Ausführungsbeispiels des erfindungsgemäßen Verfahrens;
- Fig. 2: schematisch eine Explosionsdarstellung zur Veranschaulichung eines Ausführungsbeispiels des erfindungsgemäßen Verfahrens zur Herstellung eines Differenzdrucksensors; und
- Fig. 3: eine schematische Darstellung zur weiteren Erläuterung des Ausführungsbeispiels des erfindungsgemäßen Verfahrens zur Herstellung eines Differenzdrucksensors.

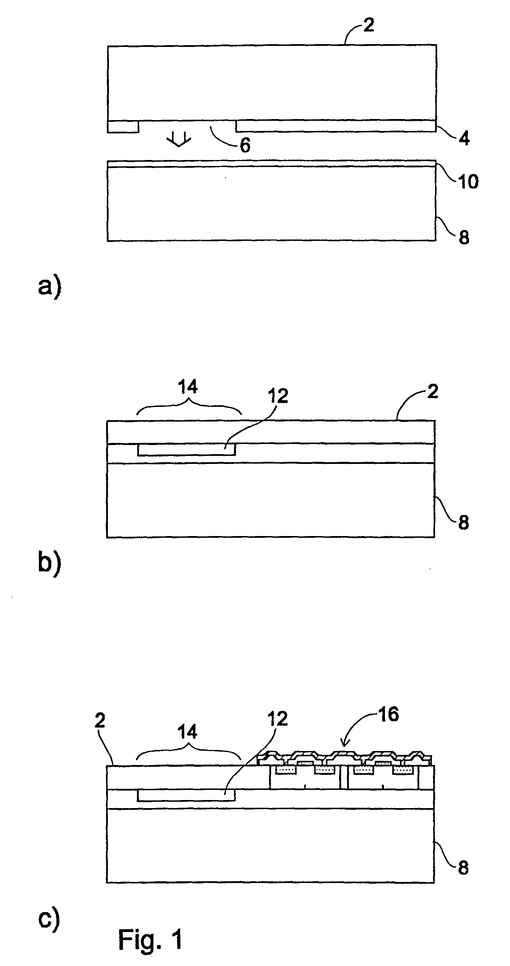

Bezugnehmend auf Fig. 1 werden zunächst die Schritte zum Herstellen des mikromechanischen Elements und der elektronischen Komponenten eines mikro-elektromechanischen Elements beschrieben, wobei bis zum Ende des in den Fig. 1a) bis 1c) gezeigten Verfahrens sämtliche Hohlräume des mikromechanischen Elements hermetisch abgeschlossen sind.

Wie in Fig. 1a) gezeigt ist, wird zunächst eine auf einen ersten Halbleiterwafer 2 aufgebrachte zwischenschicht 4 strukturiert, um eine Ausnehmung 6 in derselben zu bilden. Der Halbleiterwafer 2 wird nachfolgend über die Zwischenschicht 4 mit einem zweiten Halbleiterwafer 8 verbunden, der bei dem dargestellten Ausführungsbeispiel ebenfalls mit einer Zwischenschicht 10 versehen ist. Durch das Verbinden der beiden Wafer 2 und 8 wird durch die Ausnehmung 6 ein hermetisch abgeschlossener Hohlraum 12 definiert, wie in Fig. 1b) zu sehen ist. Nach dem Verbinden der beiden Wafer 2 und 8 wird der erste Wafer 2 von der dem Wafer 8 abgewandten Hauptoberfläche desselben her gedünnt, um oberhalb des Hohlraums 12 eine membranartige Struktur 14 zu erzeugen. Dabei bleibt der in der zwischenschicht 4 gebildete Hohlraum 12 hermetisch abgeschlossen.

Fig. 1b) zeigt die hergestellte mikromechanische Struktur, wobei durch das Herstellungsverfahren derselben ermöglicht ist, daß in dem gedünnten Wafer 2, in dem die membranartige Struktur 14 gebildet ist, integrierte Schaltungsstrukturen 16 mittels herkömmlicher Standard-Halbleiterprozesse erzeugt werden, die zur Auswertung von durch die Membran 14 erzeugten Signalen dienen kann. Dadurch wird aus der mikromechanischen Struktur die in Fig. 1c) gezeigte mikro-elektromechanische Struktur, bei der in einem Halbleiterwafer 2 zum einen eine mikromechanische gefertigte Membran 14 als auch eine integrierte Schaltung 16, die beispielsweise mittels herkömmlicher CMOS-Techniken hergestellt ist, gebildet ist. Das erfindungsgemäße Verfahren ermöglicht diese Herstellung eines mikro-elektromechanischen Elements unter Verwendung herkömmlicher Standard-Halbleiterfertigungsprozesse, beispielsweise CMOS-Prozesse, da bis zur Vollendung der integrierten Schaltung der Hohlraum 12 stets hermetisch verschlossen bleibt. Somit ermöglicht die vorliegende Erfindung die kostengünstige Herstellung von mikro-elektromechanischen Elementen mit einer, verglichen mit herkömmlichen Verfahren, reduzierten Anzahl von Verfahrensschritten.

Bei dem erfindungsgemäßen Verfahren wird als Material für die Halbleiterwafer vorzugsweise Silizium verwendet, wobei die Zwischenschicht, bzw. die Zwischenschichten 4 und 10 in Fig. 1, vorzugsweise aus einem Oxid, aus Polysilizium, aus einem Nitrid oder Metall besteht bzw. bestehen. Hierbei ist anzumerken, daß, obwohl bei dem oben beschriebenen Ausführungsbeispiel auf beiden Wafern eine Zwischenschicht angeordnet ist, bei dem erfindungsgemäßen Verfahren lediglich eine Zwischenschicht notwendig ist, in der die Ausnehmung strukturiert wird. Bei alternativen Ausführungsbeispielen kann eine Mehrzahl von Zwischenschichten zwischen den Wafern vorgesehen werden, so daß es möglich ist, durch unterschiedliche Strukturierung der einzelnen Schichten Hohlräume mit Bereichen unterschiedlicher Höhen zu erzeugen. Ferner wäre es alternativ zu dem in Fig. 1 gezeigten Verfahren möglich, auch in der auf das zweite Substrat 8 aufgebrachten Zwischenschicht 10 eine Strukturierung vorzusehen, so daß diese zusammen mit der in der Zwischenschicht 4 vorgesehenen Strukturierung nach dem Verbinden der Wafer den Hohlraum definiert. Dabei ist anzumerken, daß eine quasi unbegrenzte Möglichkeit der Strukturierung von zwischenschichten zum Erzeugen unterschiedlicher Hohlräume existiert, solange die Hohlräume nach dem Verbinden der beiden Wafer hermetisch abgeschlossen sind. Die Strukturierung zur Erzeugung dieser Hohlräume kann durch bekannte Strukturierungsverfahren, beispielsweise Photolithographie und Naß- bzw. Trocken-Ätzen oder durch selektive Abscheidung erfolgen.

Die Verbindung der Wafer kann mittels bekannter Verbindungsverfahren erfolgen, wobei die beiden Wafer mit der oder den Verbindungsschichten aufeinandergelegt und mittels spezieller Prozesse miteinander verbunden werden, beispielsweise anodischen Bondverfahren, Klebeverfahren oder dem sogenannten Silicon Fusing Bonding. Nach diesem Verbinden entsteht aus den zunächst in der bzw. den Zwischenschichten strukturierten Ausnehmung, bzw. den Ausnehmungen, ein hermetisch abgeschlossener Hohlraum 12, wie er in Fig. 1b) gezeigt ist. Im Anschluß wird einer der beiden Halbleiterwafer auf eine vorgegebene Dicke gedünnt, so daß über dem Hohlraum eine membranartige Struktur entsteht. Dabei kann der zu dünnende Wafer vorzugsweise aus einem SOI-Material ( Silicon on Insulator) bestehen, wodurch ein exaktes Dünnen erleichtert wird. Durch dieses Dünnen wird oberhalb der strukturierten Bereiche, d.h. über den Hohlräumen, eine sensorspezifische Zone bzw. eine Membran erzeugt, während die übrige Fläche des gedünnten Wafers für die Integration elektronischer Schaltungen dienen kann.

Die nach diesem Verfahren hergestellten mechanischen Strukturen, von denen beispielhaft eine in Fig. 1b) gezeigt ist, weisen jetzt noch eine nach oben geschlossene und planare Oberfläche und in der Tiefe einen oder mehrere hermetisch abgeschlossene Hohlräume auf. Damit kann der gedünnte Wafer mit den üblichen CMOS-Technologien bearbeitet werden.

Die Form der hermetisch abgeschlossenen Hohlräume ist im Grundriß beliebig, im einfachsten Fall rechteckig, vieleckig oder rund, und kann langgestreckte und gewundene Kanäle enthalten oder aus mehreren isolierten oder mit Kanälen verbundenen Strukturen bestehen. Die Höhe der Hohlräume ist durch die Dicke der strukturierten Schicht gegeben, wie in Fig. 1a) gezeigt ist, und damit im einfachsten Fall einheitlich. Durch eine mehrfache Strukturierung einer einzelnen Schicht oder durch eine Strukturierung mehrere Schichten kann jedoch, wie bereits oben erwähnt wurde, die Höhe der Hohlräume beliebig variiert werden, das heißt, es können Hohlräume mit Bereichen unterschiedlicher Höhe erzeugt werden.

Bei bevorzugten Ausführungsbeispielen des erfindungsgemäßen Verfahrens wird der Schritt des Verbindens der beiden Wafer in einem Vakuum durchgeführt, so daß bei möglichen nachfolgenden Hochtemperaturprozessen kein Überdruck durch die thermische Expansion eines in den hermetisch abgeschlossen Hohlräumen enthaltenen Gases entsteht. Somit kann eine Beschädigung der über dem oder den Hohlräumen erzeugten membranartigen Strukturen vermieden werden, da beispielsweise einem Unterdruck von 1 bar im kalten zustand, der beispielsweise bei einem Vakuum in dem Hohlraum vorliegt, leichter zu widerstehen ist, als einem Überdruck von 3 bar in einem Diffusionsofen bei beispielsweise 1100°C, wenn die Verbindung der Wafer nicht in einem Vakuum stattfindet. Je nach Anwendung der erfindungsgemäß erzeugten mikromechanischen Struktur ist es jedoch auch möglich, den Hohlraum mit einem speziellen Gas bei einem beliebigen Druck zu füllen.

Erfindungsgemäß wird nun nach Abschluß des in den Fig. 1a) bis 1c) gezeigten Verfahrens zumindest eine definierte Öffnung erzeugt, um einen Zugang zu dem hermetisch abgeschlossenen Hohlraum zu schaffen. Dadurch kann durch das in Fig. 1c) gezeigte Element beispielsweise ein Differenzdrucksensor oder alternativ auch ein Beschleunigungssensor realisiert werden, wenn die Öffnungen in dem membranartigen Bereich 14 beispielsweise so definiert werden, daß sie eine Trägerstruktur für eine bewegliche Masse definieren.

Nach Abschluß der in den Fig. 1a) bis 1c) gezeigten Verfahrensschritte werden der oder die Hohlräume gemäß der Erfindung an vorbestimmten Stellen geöffnet. Dieses Öffnen kann in einer Vakuumkammer, an Umgebungsluft, unter Schutzgas, in einer speziellen Atmosphäre oder unter einer Flüssigkeit erfolgen. Jedenfalls dringt dieses Medium in den Hohlraum ein und füllt ihn vollständig, wenn der Hohlraum zuvor unter Vakuum war, wenn der Schritt des Verbindens der Wafer unter einem Vakuum stattgefunden hat, wie oben erläutert wurde.

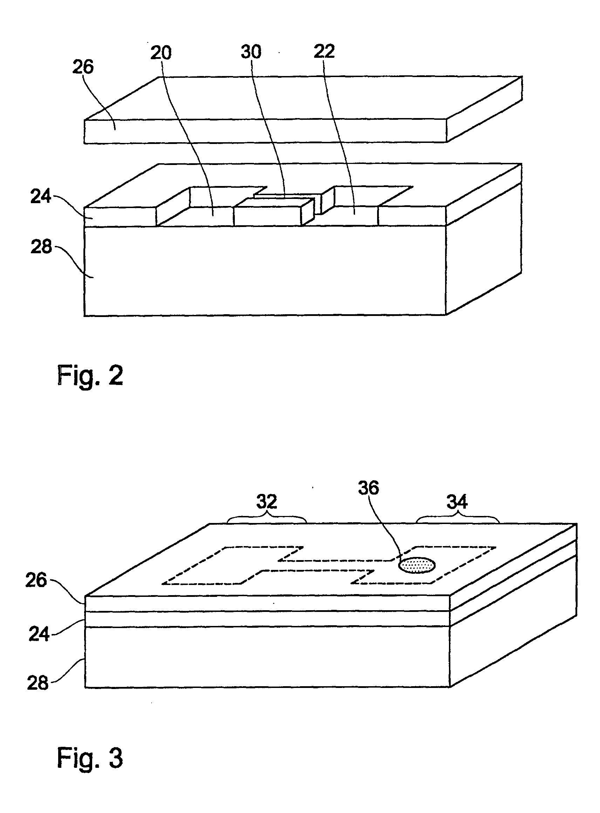

Das Öffnen des Hohlraums kann auf unterschiedliche Arten realisiert werden. Bei der Herstellung eines Differenzdrucksensors, wie sie nachfolgend bezugnehmend auf die Fig. 2 und 3 näher erläutert wird, kann beispielsweise die über einem der Hohlräume angeordnete membranartige Struktur durch Aufstechen mit einer Nadel oder Klinge geöffnet werden. Um zu verhindern, daß dabei zu erwartende Splitter in benachbarte Hohlräume eindringen, können die die Hohlräume verbindenden Kanäle labyrinthartig ausgestaltet werden. Alternativ ist es möglich, die membranartige Struktur über einem der Hohlräume mittels gepulster Laserstrahlung zu öffnen. Dieses verfahren vermeidet die Erzeugung von Splittern und möglicherweise Mikrorissen, so daß die Zuverlässigkeit nicht gefährdet wird. Ferner ist es möglich, die entstehenden Dämpfe und Schmelztropfen durch geeignete Gestaltung der Kanäle unschädlich zu machen. Diese beiden Verfahren zum Öffnen der Hohlräume eignen sich für bereits gesägte, vereinzelte und möglicherweise bereits in ein Gehäuse montierte Chips. Nach dem Öffnen erfolgt bei Drucksensoren die Montage der Röhrchen zum Anschluß an das druckführende Medium.

Üblicherweise werden in einem Wafer eine Mehrzahl von mikro-elektromechanischen Elementen gebildet, die dann in einzelne Chips vereinzelt werden. Dabei kann das Öffnen der Hohlräume während des Sägens der Wafer erfolgen, wenn die Kanäle bis zum Ritzrahmen, der die Sägestraßen definiert, geführt worden sind. Dann sind die Kanäle von der Seitenfläche der Chips zugänglich, was Vorteile bei der Montage bieten kann. Das Eindringen von Kühlwasser kann durch trockenes Sägen, durch Anritzen und Brechen oder durch Schneiden mit gepulsten Laserstrahlen vermieden werden.

Das Öffnen der Hohlräume kann ferner durch ein gezieltes Ätzen, beispielsweise in einem Plasmaätzer, erfolgen. Dabei wird auf die Scheibenoberfläche und somit die membranartige Struktur eine Schutzschicht aufgebracht, beispielsweise eine Passivierungsschicht oder ein Photolack, die Aussparungen an den Stellen aufweist, an denen die Öffnung oder die Öffnungen gebildet werden sollen. Dort wird die Membran weggeätzt, während sie an den geschützten Stellen bestehen bleibt. Das dabei eindringende Gas verursacht im Gegensatz zu Flüssigkeiten keine Probleme in den Hohlräumen. Die Passivierung kann nach diesem Ätzschritt auf dem Bauelement verbleiben, während der Photolack durch Veraschen im Plasma entfernt werden kann. Dieses Ätzverfahren kann vor dem Vereinzeln der Chips für eine Mehrzahl von Elementen im Waferverbund oder nach dem Vereinzeln der Chips erfolgen.

Nachfolgend wird bezugnehmend auf die Fig. 2 und 3 ein bevorzugtes Ausführungsbeispiel des erfindungsgemäßen Verfahrens zum Herstellen eines Differenzdrucksensors beschrieben. Mikromechanisch integrierte Drucksensoren messen einen von außen angelegten Druck eines Gases oder einer Flüssigkeit und verarbeiten ihn zu einem elektrischen Signal. Üblicherweise werden diese Sensoren als Absolutdrucksensor ausgestaltet. Ein solcher Sensor kann beispielsweise den in Fig. 1c) gezeigten Aufbau aufweisen, wobei eine dünne Schicht über einem hermetisch abgeschlossenen Hohlraum liegt und nach dem Prinzip eines Dosenbarometers als Membran wirkt. Um von Temperaturschwankungen der Umgebung möglichst unabhängig zu sein, ist der Hohlraum üblicherweise leer, steht also unter Vakuum.

Häufig ist es erwünscht, den Druck zweier Volumina zu vergleichen, wobei nur der Druckunterschied von Interesse ist. Der zu messende Druckunterschied ist häufig sehr klein im Vergleich zum absoluten Druck. Daher wäre die Meßgenauigkeit sehr gering, wenn die Messung durch Differenzbildung der Meßwerte zweier Absolutdrucksensoren erfolgen würde. Es ist günstiger, die Membran je von einer Seite mit den zu messenden Volumen zu verbinden und nur den Druckunterschied zu messen. Bei makroskopischen Sensoren mit Membranen aus Metall oder Gummi ist ein solcher Sensor problemlos realisierbar. Bei mikroelektronisch integrierten Sensoren ist jedoch die Symmetrie der beiden Seiten der Membran nicht mehr gegeben. In der Planartechnologie gibt es immer eine Oberseite, welche den technologischen Prozessen ausgesetzt ist und leicht zu reinigen ist, und eine Unterseite, welche während der Herstellung vor agressiven Gasen und Flüssigkeiten geschützt ist. Um zu ermöglichen, daß die Wafer mit üblichen Standardhalbleiterprozessen, beispielsweise CMOS-Technologien, bearbeitet werden können, müssen sie eine nach oben geschlossene und planare Oberfläche aufweisen. Dies wird durch das erfindungsgemäße Verfahren möglich, das somit die Integration von mikromechanischen Elementen und unter Verwendung herkömmlicher Halbleiterprozesse gebildeten elektronischen Komponenten in einem Wafer ermöglicht.

Wie in der schematischen Explosionsdarstellung von Fig. 2 gezeigt ist, werden zur Herstellung eines Differenzdrucksensors zwei Hohlräume 20 und 22 in einer Zwischenschicht 24, die zwischen zwei Wafern 26 und 28 gebildet ist, erzeugt. Die beiden Hohlräume sind durch einen in der Zwischenschicht 24 definierten Kanal 30 verbunden. Es ist ersichtlich, daß in Fig. 2 das Verfahrensstadium dargestellt ist, das in Fig. 1b) für einen einzelnen Hohlraum gezeigt ist, wobei der obere Wafer 26 lediglich zu Zwecken der Verdeutlichung getrennt von der Zwischenschicht 24 dargestellt ist, so daß die in der Zwischenschicht 24 gebildeten Hohlräume 20 und 22 sowie der Kanal 30 nach außen hermetisch abgeschlossen sind. Dabei ist ferner anzumerken, daß die Hohlräume bzw. der Kanal auch in einer Mehrzahl von Zwischenschichten strukturiert sein können, um Bereiche unterschiedlicher Höhe definieren zu können oder für das spätere Öffnen Sollbruchstellen zu erzeugen.

Bei der schematischen Darstellung von Fig. 2 ist der obere Wafer 26 bereits gedünnt, so daß über den Hohlräumen 20 und 22 membranartige Strukturen 32 und 34, Fig. 3, gebildet sind, deren Umrisse in Fig. 3 in gestrichelten Linien dargestellt sind. Nach dem Erzeugen der in Fig. 2 dargestellten Struktur wird durch die über dem Hohlraum 22 angeordnete Membran 34 eine Öffnung 36 gebildet, die einen Zugang zu dem Hohlraum 22 und somit über den Kanal 30 auch zu dem Hohlraum 20 bildet. Hierbei ist anzumerken, daß die Öffnung erst dann in der Membran 34 gebildet wird, wenn die Halbleiterfertigung, d.h. die Erzeugung von elektronischen Komponenten, z.B. in der Form einer Auswerteeinheit, in dem Halbleiterwafer 26 abgeschlossen ist. Für diese Halbleiterfertigung können übliche Standardhalbleiterprozesse, z.B. CMOS-Verfahren, verwendet werden, da sämtliche Hohlräume zum Zeitpunkt der Halbleiterfertigung hermetisch abgeschlossen sind. Ferner ist anzumerken, daß die elektronischen Komponenten in Fig. 3 nicht dargestellt sind.

Das in Fig. 3 dargestellte mikromechanische Element kann als Differenzdrucksensor dienen, da auf die Oberseite der Membran 32 ein erster Druck wirken kann, während auf die Unterseite desselben über die Öffnung 36, den Hohlraum 22, den Kanal 30 und den Hohlraum 20 ein zweiter Druck wirken kann, so daß das Ausgangssignal des durch die Membran 32 und den Hohlraum 20 gebildeten Sensors die Differenz dieser beiden Drücke wiedergibt. Um dies zu ermöglichen, können bei der Aufbau- und Verbindungs-Technik der Sensor, d.h. die Membran 32 und der geöffnete zweite Hohlraum 22, beispielsweise durch aufgeklebte Röhrchen mit je einem Gasvolumen verbunden werden. Da der zweite Hohlraum 22 durch den Kanal 30 mit der Unterseite der Membran 32 durch Gasaustausch in Kontakt steht, wirkt der hier beaufschlagte Druck auf die Unterseite der Membran 32. Somit registriert der Sensor den Differenzdruck zwischen den beiden Anschlüssen. Beide Anschlüsse können von der Oberseite des Sensors montiert werden, wodurch eine Vereinfachung des Aufbaus erreicht werden kann.

Alternativ ist es möglich, sowohl den Drucksensor, der aus Membran 32 und Hohlraum 20 gebildet ist, als auch den Kanal und den zweiten Hohlraum mehrfach auszuführen, um beispielsweise ein Sensorarray zu erzeugen. Das Verhältnis von Hohlraumvolumen zu Strömungswiderstand des Verbindungskanals kann in weiten Grenzen variiert werden, so daß die Ansprechzeit des Sensors einstellbar ist.

Neben der oben beschriebenen Anwendung des erfindungsgemäßen Verfahrens zur Herstellung von Differenzdrucksensoren eignet sich das erfindungsgemäße Verfahren auch zur Herstellung von mechanisch schwingungsfähigen Sensoren und Aktoren, bei denen es ebenfalls vorteilhaft ist, wenn der Sensor und die zugehörige Auswerteelektronik auf dem gleichen Chip integriert sind. Solche mechanisch schwingungsfähigen Sensoren und Aktoren werden beispielsweise bei Airbagauslösern, Beschleunigungsmessern, Stimmgabeln, Drehgebern, Ventilen, Pumpen, Schaltern und dergleichen benötigt. Als Besonderheit ist hier eine schwingende Masse nötig, die an relativ dünnen Halterungen aufgehängt ist. Die Halterungen dienen als elastische Federn.

Erfindungsgemäß kann eine solche Halterungsstruktur für eine bewegliche Masse beispielsweise erzeugt werden, indem ausgehend von der in Fig. 1c) als Drucksensor beschriebenen Struktur der membranartige Bereich 14 mit Öffnungen versehen wird, um eine solche Trägerstruktur zu definieren. Dabei ist anzumerken, daß während der Halbleiterfertigung, d.h. während der Erzeugung der Auswerteschaltung, eine bewegliche Masse auf die Membran 14 aufgebracht oder in derselben strukturiert wird. Es ist klar, daß die Auswerteschaltung, die in Fig. 1c) als Auswerteschaltung 16 für einen Drucksensor dargestellt ist, entsprechend für einen Beschleunigungssensor angepaßt werden muß. Während der Halbleiterfertigung ist der membranartige Bereich vollständig mit dem umgebenden Bereich des Wafers, in dem der membranartige Bereich gebildet ist, verbunden, so daß der Hohlraum unter demselben hermetisch abgeschlossen ist.

Wie bereits oben erläutert wurde, bringt dieses Verfahren erhebliche Vorteile bei der Fertigung hinsichtlich der Ausbeute, der mechanischen Unempfindlichkeit sowie dem Schutz vor Flüssigkeiten. Um nun die Masse am Ende der Halbleiterfertigung, bei der die elektronischen Komponenten erzeugt werden, beweglich zu machen, wird die Membran am Rand der Masse vorzugsweise durch ein Ätzverfahren entfernt. Der als Halterung vorgesehene Teil der Membran wird dabei vor dem Ätzangriff geschützt und bleibt bestehen. Die zu ätzende Fläche ist bei dieser Anwendung im Vergleich zu den vorgenannten Öffnung, beispielsweise des Hohlraums 22 bei dem in den Fig. 2 und 3 dargestellten Differenzdrucksensor, großflächig. Da die bewegliche Masse möglichst groß sein soll, ist es günstig, sie möglichst dick zu gestalten. Da andererseits die zu öffnenden Bereiche für leichtes Öffnen möglichst dünne Membranen haben sollen, ist es vorteilhaft mehrere Schichten unterschiedlich zu strukturieren. Dafür ist jeweils eine zusätzliche Lithographieebene notwendig. Die schwingende Masse, die durch die auf die oben beschriebene Art und Weise gefertigte Trägerstruktur gehalten wird, kann aus einem mehrschichtigen Aufbau aus Silizium, Metall oder Oxid gefertigt sein.

Als weiteres Anwendungsgebiet für das erfindungsgemäße Verfahren zur Herstellung von mikro-elektromechanischen Strukturen sind noch Fluidsysteme zu nennen. Bei Mikrofluidsystemen sind die bei makroskopischen Systemen durch Glasröhren und Glaskolben sowie Gummischläuche realisierten chemischen Reaktionsgefäße miniaturisiert in Silizium oder einem anderen für die Mikrosystemtechnik geeigneten Material ausgeführt. Die Anwendung erstreckt sich auf die Dosierung, Mischung und physikalische Vermessung von kleinen Flüssigkeitsmengen und deren chemischen und biologischen Reaktionen. Die Hohlräume, deren Verbindungskanäle sowie Verzweigungen und Anschlußöffnungen werden dabei erfindungsgemäß in einer oder mehreren zwischenschichten, die zwischen zwei Wafern angeordnet sind, strukturiert. Durch ein anschließendes Verbinden der Wafer werden die Hohlräume dann hermetisch verschlossen, woraufhin einer der Wafer gedünnt wird. Dieser Wafer weist eine planare obere Oberfläche auf und ist somit mit üblichen CMOS-Technologien bearbeitbar, so daß elektronische Sensoren, wie Drucksensoren, Temperatursensoren, Leitfähigkeitssensoren oder auch Photodioden zur Lichtabsorption, und Aktoren, beispielsweise Verstärker, Mikrocontroler, Elektroden und dergleichen, in direkter Nähe der Gefäße aufgebaut werden können. Durch diese Integration von Sensor, Aktor und Logik auf einem Substrat wird das Bauteil ein Mikrosystem. Nach Abschluß der Halbleiterfertigung werden die für den Anschluß vorgesehenen Hohlräume gemäß den oben beschriebenen Verfahren an vorbestimmten Stellen geöffnet und mit den zuleitungen der Flüssigkeiten verbunden.

Die vorliegende Erfindung ermöglicht somit die Herstellung mikro-elektromechanischer Elemente, wobei sämtliche Hohlräume der mikromechanischen Strukturen der mikro-elektromechanischen Elemente nach dem Erzeugen derselben hermetisch abgeschlossen sind, während eine nach oben geschlossen und planare Oberfläche geliefert wird, so daß die Wafer von oben unter Verwendung üblicher CMOS-Technologien bearbeitet werden können. Erst nach dem Fertigstellen der elektronischen Komponenten werden die Hohlräume geöffnet. Somit sind erfindungsgemäß Probleme, die bei herkömmlichen Verfahren durch das Reinigen von Waferoberflächen bzw. das Eindringen von Flüssigkeiten in Hohlräume und die Verschleppung von Partikeln und Kontaminationen bewirkt werden, beseitigt. Damit schafft die vorliegende Erfindung ein wenig aufwendiges Verfahren, das die Herstellung von mikro-elektromechanischen Elementen kostengünstig und mit hoher Ausbeute ermöglicht.

## Patentansprüche

1. Verfahren zum Erzeugen eines mikro-elektromechanischen Elements, mit folgenden Schritten:
a) Strukturieren einer ersten Zwischenschicht (4; 24), die auf eine erste Hauptoberfläche eines ersten Halbleiterwafers (2; 26) aufgebracht ist, um eine Ausnehmung (6; 20, 22, 30) zu erzeugen;
b) Verbinden des ersten Halbleiterwafers (2; 26) über die erste Zwischenschicht (4; 24) mit einem zweiten Halbleiterwafer (8; 28), derart, daß durch die Ausnehmung mehrere, durch einen Kanal (30) verbundene, nach außen hermetisch abgeschlossene Hohlräume (20, 22) definiert sind;
c) Dünnen von einem der Wafer (2; 26) von einer der ersten Zwischenschicht (4; 24) abgewandten Oberfläche her, um eine membranartige Struktur (14; 32, 36) über den Hohlräumen (12; 20, 22) zu erzeugen;
d) Erzeugen elektronischer Komponenten (16) in dem gedünnten Halbleiterwafer (2; 26);
e) Erzeugen zumindest einer definierten Öffnung (36), um einen Zugang zu einem der Hohlräume (20, 22) zu schaffen.

2. Verfahren nach Anspruch 1, bei dem auf die Hauptoberfläche des zweiten Halbleiterwafers (8), der über die Zwischenschicht (4) mit dem ersten Halbleiterwafer (2) verbunden wird, vor dem Verbinden eine zweite Zwischenschicht (10) aufgebracht wird.

3. Verfahren nach Anspruch 2, bei dem die zweite Zwischenschicht strukturiert wird, derart, daß nach dem Verbinden die Strukturierung der zweiten Zwischenschicht und die Ausnehmung in der ersten Zwischenschicht einen Hohlraum definieren.

4. Verfahren nach einem der Ansprüche 1 bis 3, bei dem zusätzlich zu der ersten Zwischenschicht weitere Zwischenschichten zwischen den beiden Halbleiterwafern vorgesehen werden, die vor dem Verbinden der beiden Halbleiterwafer strukturiert werden, um einen Hohlraum mit Bereichen variabler Höhe zu erzeugen.

5. Verfahren nach einem der Ansprüche 1 bis 4, bei dem der erste und der zweite Wafer (2, 8; 26, 28) aus Silizium bestehen.

6. Verfahren nach einem der Ansprüche 1 bis 5, bei dem die eine oder die mehreren Zwischenschichten aus einem Oxid, aus Polysilizium, aus einem Nitrid oder aus Metall bestehen.

7. Verfahren nach einem der Ansprüche 1 bis 6, bei dem das Verbinden im Schritt b) in einem Vakuum durchgeführt wird.

8. Verfahren nach einem der Ansprüche 1 bis 7, bei dem als erster (2; 26) und/oder zweiter (8; 28) Wafer ein SOI-Wafer verwendet wird.

9. Verfahren nach einem der Ansprüche 1 bis 8, bei dem die zumindest eine definierte Öffnung (36) in der membranartigen Struktur (34) erzeugt wird.

10. Verfahren nach Anspruch 9, bei dem das Erzeugen der zumindest einen definierten Öffnung (36) in der membranartigen Struktur (34) mit einer Nadel, einer Klinge, durch die Verwendung einer gepulsten Laserstrahlung oder durch Ätzen erfolgt.

11. Verfahren nach einem der Ansprüche 1 bis 10, bei dem eine Mehrzahl von mikro-elektromechanischen Strukturen in einem Wafer erzeugt werden, wobei das Verfahren ferner den Schritt des Vereinzelns der einzelnen, mikromechanischen Strukturen in Chips aufweist, wobei durch das vereinzeln die zumindest eine definierte Öffnung, um einen Zugang zu einem Hohlraum zu schaffen, erzeugt wird.

12. Verfahren nach Anspruch 1, bei dem der Kanal im Schritt a) labyrinthartig strukturiert wird, derart, daß beim Erzeugen der Öffnung entstehende Störprodukte an einem Passieren des Kanals gehindert sind.

13. Verfahren nach einem der Ansprüche 1 bis 12, bei dem im Schritt e) eine Mehrzahl von definierten Öffnungen in dem membranartigen Struktur erzeugt werden, derart, daß die membranartige Struktur nach dem Erzeugen der Öffnungen eine Trägerstruktur für die bewegliche Masse eines Beschleunigungssensors bildet.

## Claims

1. A method of producing a micro-electromechanical element comprising the following steps:
a) structuring a first intermediate layer (4; 24), which is applied to a first main surface of a first semiconductor wafer (2; 26), so as to produce a recess (6; 20, 22, 30);
b) connecting the first semiconductor wafer (2; 26) via the first intermediate layer (4; 24) to a second semiconductor wafer (8; 28) in such a way that several cavities (20, 22) connected by a channel (30) and hermetically sealed relative to the exterior are defined by the recess;
c) thinning one of the wafers (2; 26) from a surface facing away from said first intermediate layer (4; 24) so as to produce a diaphragm-like structure (14; 32, 36) on top of the cavity (12; 20, 22);
d) producing electronic components (16) in said thinned semiconductor wafer (2; 26);
e) producing at least one defined opening (36) so as to provide access to the hermetically sealed cavity (20, 22).

2. A method according to claim 1, wherein the main surface of the second semiconductor wafer (8), which is connected to the first semiconductor wafer (2) via the intermediate layer (4), has applied thereto a second intermediate layer (10) prior to the connecting step.

3. A method according to claim 2, wherein the second intermediate layer is structured in such a way that, after the connecting step, the structure formed in the second intermediate layer and the recess in the first intermediate layer define a cavity.

4. A method according to one of the claims 1 to 3, wherein, in addition to the first intermediate layer, further intermediate layers are provided between the two semiconductor wafers, said intermediate layers being structured before the two semiconductor wafers are connected, so as to produce a cavity with areas of variable height.

5. A method according to one of the claims 1 to 4, wherein the first and the second wafer (2, 8; 26, 28) consist of silicon.

6. A method according to one of the claims 1 to 5, wherein said one or said plurality of intermediate layers consist(s) of an oxide, a polysilicon, a nitride or of metal.

7. A method according to one of the claims 1 to 6, wherein the connection in step b) is carried out in a vacuum.

8. A method according to one of the claims 1 to 7, wherein an SOI wafer is used as a first (2; 26) and/or second (8; 28) wafer.

9. A method according to one of the claims 1 to 8, wherein said at least one defined opening (36) is produced in the diaphragm-like structure (34).

10. A method according to claim 9, wherein said at least one defined opening (36) is produced in the diaphragm-like structure (34) by means of a needle, a blade, by the use of a pulsed laser radiation or by etching.

11. A method according to one of the claims 1 to 10, wherein a plurality of micro-electromechanical structures is produced in a wafer, said method comprising in addition the step of dicing the individual micromechanical structures so as to obtain chips, said at least one defined opening, which provides access to the cavity, being produced by the dicing step.

12. A method according to claim 1, wherein the channel is structured in the fashion of a labyrinth in step a) in such a way that disturbing products formed during the production of the opening are prevented from passing said channel.

13. A method according to one of the claims 1 to 12, wherein a plurality of defined openings is produced in the diaphragm-like structure in step e) in such a way that, after the production of the openings, the diaphragm-like structure forms a supporting structure for the movable mass of an acceleration sensor.

## Revendications

1. Procédé pour produire un élément micro-électromécanique, aux étapes suivantes consistant à :
a) structurer une première couche intermédiaire (4 ; 24) qui est appliquée sur une première surface principale d'une première plaquette à semi-conducteur (2 ; 26), pour générer un évidement (6 ; 20, 22, 30) ;
b) assembler la première plaquette à semi-conducteur (2 ; 26), par l'intermédiaire de la première couche intermédiaire (4 ; 24), avec une seconde plaquette à semi-conducteur (8 ; 26), de sorte que par l'évidement soient définis plusieurs espaces creux (20, 22) reliés par un canal (30), obturés hermétiquement vers l'extérieur;
c) amincir l'une des plaquettes (2 ; 26) depuis une surface éloignée de la première couche intermédiaire (4; 24), pour générer une structure en forme de membrane ( 14 ; 32, 36) au-dessus des espaces creux (12 ; 20, 22) ;
d) générer des composants électroniques (16) dans la plaquette à semi-conducteur (2 ; 26) amincie ;
e) générer au moins une ouverture définie (36), pour créer un accès à l'un des espaces creux (20, 22).

2. Procédé selon la revendication 1, dans lequel est appliquée sur la surface principale de la seconde plaquette à semi-conducteur (8) qui est assemblée, par l'intermédiaire de la couche intermédiaire (4), avec la première plaquette à semi-conducteur (2), avant l'assemblage, une seconde couche intermédiaire (10).

3. Procédé selon la revendication 2, dans lequel la seconde couche intermédiaire est structurée, de sorte qu'après l'assemblage, la structuration de la seconde couche intermédiaire et l'évidement dans la première couche intermédiaire définissent un espace creux.

4. Procédé selon l'une des revendications 1 à 3, dans lequel, en plus de la première couche intermédiaire, d'autres couches intermédiaires sont prévues entre les deux plaquettes à semi-conducteur, lesquelles sont structurées, avant l'assemblage des deux plaquettes à semi-conducteur, pour générer un espace creux à zones de hauteur variable.

5. Procédé selon l'une des revendications 1 à 4, dans lequel la première et la seconde plaquette (2, 8 ; 25, 28) sont réalisées en silicium.

6. Procédé selon l'une des revendications 1 à 5, dans lequel l'une ou les plusieurs couches intermédiaires sont réaliséees en un oxyde, en polysilicium, en un nitrure ou en métal.

7. Procédé selon l'une des revendications 1 à 6, dans lequel l'assemblage à l'étape b) est réalisé sous vide.

8. Procédé selon l'une des revendications 1 à 7, dans lequel est utilisée, comme première (2 ; 26) et/ou seconde (8 ; 28) plaquette, une plaquette SOI.

9. Procédé selon l'une des revendications 1 à 8, dans lequel l'au moins une ouverture définie (36) est générée dans la structure en forme de membrane (34).

10. Procédé selon la revendication 9, dans lequel la génération de l'au moins une ouverture définie (36) dans la structure en forme de membrane (34) a lieu à l'aide d'une aiguille, d'une lame, à l'aide d'un rayon laser pulsé ou par gravure.

11. Procédé selon l'une des revendications 1 à 10, dans lequel une pluralité de structures micro-électroniques sont générées dans une plaquette, le procédé présentant, par ailleurs, l'étape consistant à séparer les différentes structures micromécaniques en puces, par la séparation étant générée l'au moins une ouverture définie, pour créer un accès à un espace creux.

12. Procédé selon la revendication 1, dans lequel le canal à l'étape a) est structuré en forme de labyrinthe, de sorte qu'il soit évité que les produits perturbateurs se produisant lors de la génération de l'ouverture ne passent dans le canal.

13. Procédé selon l'une des revendications 1 à 12, dans lequel sont générées, à l'étape e), une pluralité d'ouvertures définies dans la structure en forme de membrane, de sorte que la structure en forme de membrane constitue, après la génération des ouvertures, une structure de support de la masse mobile d'un capteur d'accélération.
